# EUROPEAN PATENT APPLICATION

(11) **EP 1 059 222 A2**
(43) Date of publication of application: **13.12.2000**
(21) Application number: 00202020.4
(22) Date of filing: 07.06.2000
(51) Int. Cl.: B62D 65/00

(54) **Vehicle body assembly and processing line**

(30) Priority: 09.06.1999 IT MI991288
(71) Applicant: FATA AUTOMATION S.p.A., 10044 Pianezza (Torino) (IT)
(72) Inventor: Recupero, Antonio, 10100 Torino (IT)
(74) Representative: Faraggiana, Vittorio, Dr. Ing.

(57) **Abstract**

An automobile body assembly and processing line is made up of a plurality of central (10) units along which are conveyed and supplied the parts (13) to be assembled and processed and beside the line thus formed are associated side units (30) on which are mounted the manually controlled or robotized operating machines (22) as well as the auxiliary operating and control equipment. The side units (30) forming assembled sub-wholes are connectable to the respective central units (34) through prepared separable connections.

## Description

It is known that automobile bodies are assembled along processing lines having conveyance members for the various parts to be assembled or processed to determine their positioning in successive processing stations.

Equipment is assembled beside the line performing the different specific processing operations required at each station.

With reference to the body processing lines this equipment typically includes e.g. manual or robotized welders. With this basic equipment is combined equipment performing the most varied operations of assembly, forming and processing required by body forming in the broadest acceptance which can be given to these terms it being useless to list here the specific individual processing operations to which the vehicle being formed is subject and the associated equipment performing it.

In preparing these lines to which reference is made here the automobile industry meets problems which are not easy to solve, especially considering the time necessary for building a line for the manufacture of a given automobile model or to convert or adapt an existing line to the processing of a different or modified model.

The practical difficulties and time necessary for assembly of all the equipment beside the line and execution of the necessary wiring and connections for powering, operation and control of the equipment are obvious.

It should also be kept in mind that complex electrical and fluidic connections are required between the equipment and the positioning members for the vehicle members to be processed and sensors and measuring equipment mounted along the line.

These difficulties in the particular processing line type to which the present invention refers are made worse by the fact that numerous different producing factories are involved in the manufacture of the conveyance and positioning members of the line and for the equipment of diverse technologies necessary for carrying out the numerous processing operations to which the vehicle body being formed is subjected.

The time on the order of many months necessary for line preparation affects the time necessary for putting a new automobile model in production and on the market and causes a financial burden of extreme importance.

The purpose of the present invention is to remedy as much as possible the problems involved in the preparation of a line of the type discussed here and also achieve the important purpose of making line conversion quick and easy for the processing of a different automobile model.

These and other purposes which will be clarified in the following description are achieved by the present invention by preparing an automobile body assembly and processing line and possible assembly thereon of component members to be associated with the body and made up of a succession of associable aligned central units comprising positioning members for the automobile members which are to be assembled and processed and control members for the various members reaching the position with there being associated with each of a plurality of central units at least one side unit on which is assembled processing equipment for the automobile members and powering, command and control devices for this equipment with there being assembled connectable terminals on the central and side units for forming connections between the electrical or fluidic systems between the central unit and the side unit associated therewith.

To better clarify the purposes and essential characteristics of the present invention an exemplifying practical embodiment thereof is described below and diagrammatically illustrated in the annexed drawings wherein:

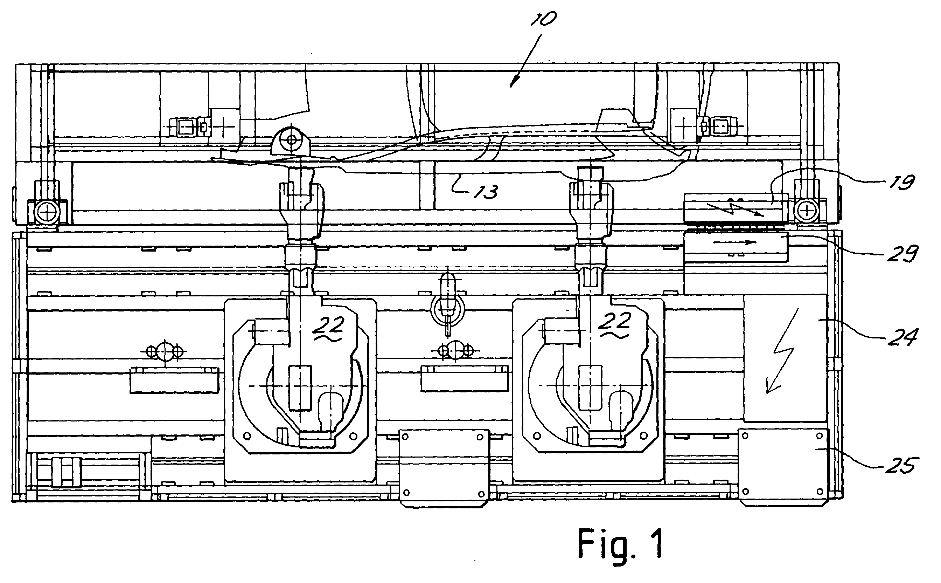

- FIG 1 shows a partial plan view of a central assembly line unit flanked by a side unit,

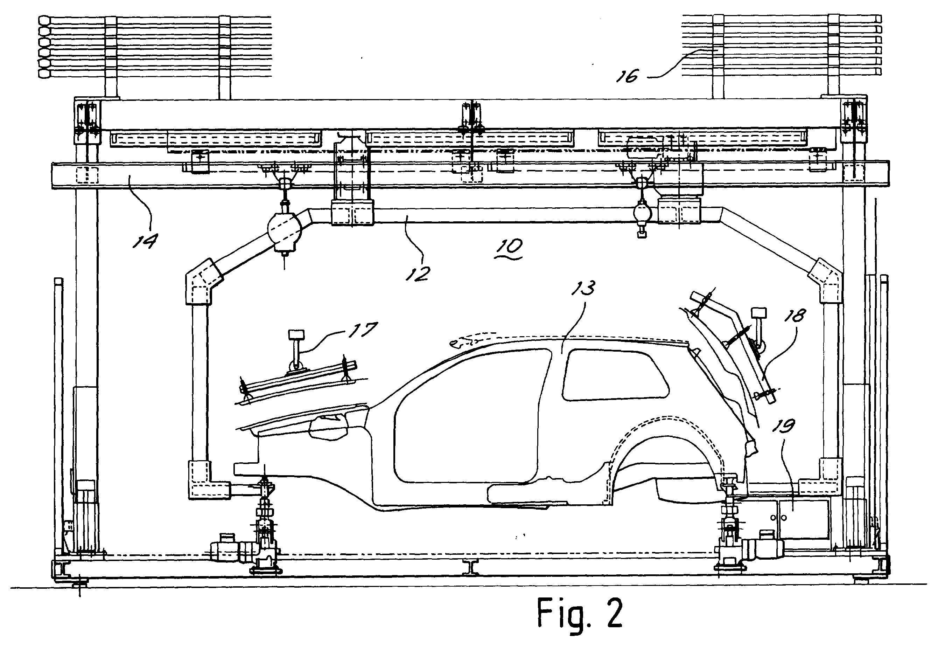

- FIG 2 shows a side view of a central unit, and
- FIG 3 shows a cross section view of a line unit associated with two side units.

As shown in the figures the line is made up of a plurality of central units 10 one of which is shown in the figures equipped with tram rail conveyance equipment 14 along which move carriages schematized at 12 which carry the body members 13 of the automobile to be assembled or processed.

The above mentioned conveyor line is intended only as an example of a member of known equipment in the specific field for this purpose in a plurality of construction types which are selected in advance on the basis of the specific characteristics of the line. It is therefore intended that the conveyor line might be of a different type, possibly with wheels on the floor just as it should be considered as having all the equipment and accessories required for controlled positioning of the body member 13 in relation to the longitudinal dimension to enable programming if the intervention position of the operational machine which is to act at predetermined points on the automobile body being formed.

In particular the unit 10 makes up a processing station for a body assembly system which could be the type illustrated in European patent application 0 934 868 in the name of this same applicant.

As may be seen from the drawings the unit 10 is born by a lower platform member 11 from which rise the structures making up the unit.

The unit 10 can have complementary pieces of equipment 17 and 18 which place detached component parts near the automobile body and which for the sake of drawing ease are shown schematized and without related part supply lines.

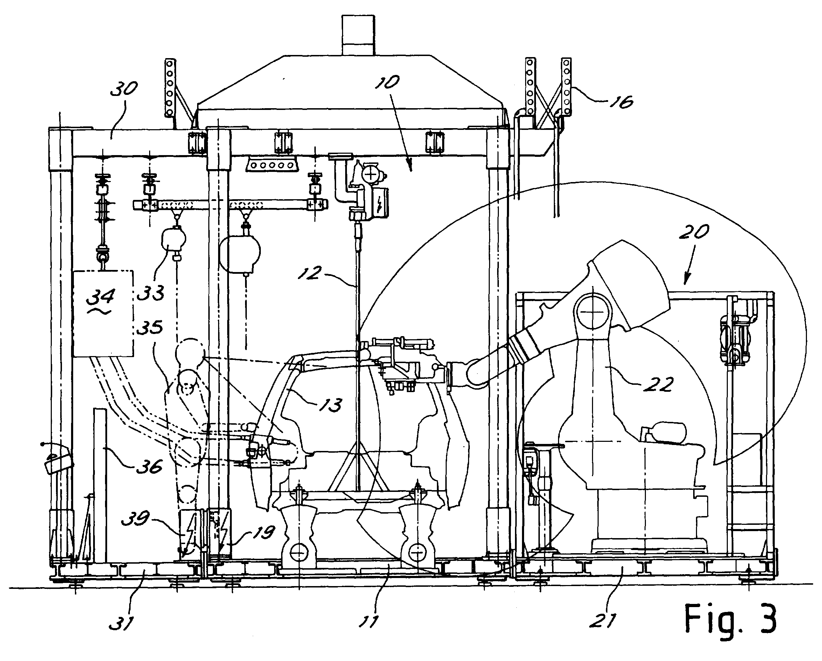

FIG 3 shows a unit 10 with which are flanked two side units 20 and 30 respectively. The unit 20 is mounted on a platform 21 flanking one side of the platform 11 of the unit 10. On this platform are shown two mounted welding robots 22 intended as mere examples of an operating machine designed to work on the forming automobile body. On the same platform are mounted cabinets schematized at 24 and containing the power supply panels and containing the control and command equipment 25 for the welding robot 22.

These member examples are intended to exemplify all those accessory command, control and operation members for the operating machines exemplified by the welding robot. On the platform 21 is also mounted a panel 29 which faces a panel 19 mounted on the platform 11 of the unit 10. The panels 19 and 29 contain connectable terminals in order to provide all the electrical and fluidic connections required as existing between the central unit 10 with its positioning members and the side unit 20 with its equipment designed to operate on the automobile body positioned in the unit 10.

Beside the unit 10 is also shown by way of example a different side unit 30 mounted on a platform 31. The unit 30 is designed to contain manually controlled operating units supported by conventional suspensions 33 and powered by units 34 handled by an operator schematized at 35. As a view of the operating zone is required the unit can have lighting equipment 36.

The unit 30 is designed to accommodate an operator and is equipped with the necessary safety and supervision equipment. On the platform 31 is also mounted a panel 39 fully equivalent to the panel 29 of the platform 21 which comes into contact with a panel 19 of the platform 11 to stabilize the required connections for the unit 30.

Both the units 20 and 30 as shown are to be considered non-binding examples of operating units designed to act for assembly or in any case for performance of operations on the forming automobile body momentarily standing and positioned in the unit 10.

The whole of a plurality of aligned units 10 constituting the line can be equipped with supports 16 for power distribution lines or in any case utilities required by the line.

In the line construction diagram suggested by the present invention the different central units 10 and side units 20-30 become members largely independent of each other from the construction viewpoint. This allows builders to operate separately and simultaneously on each unit to prepare the operational equipment which is mounted on each unit including the connections to the related power supply and control members including wiring and forming a sort of autonomous modules which can be assembled for formation of the line in an extremely flexible manner without the necessity of performing long and complicated operations requiring highly skilled labor with different skills.

The line made up of a plurality of units 10 flanked by various side units can be modified rapidly. To move or differentiate a processing operation from one unit 10 to the other it is sufficient to move the related side unit with simpler disconnection of the prearranged connections without touching all the complicated connections of each operating machine to its connections and controls, achieving the preset purposes of the present invention.

Clearly the design engineer can advantageously select the dimensions of each component unit and mainly the side units in advance with dimensions compatible with the conveyor to prepare the unit in the most suitable environment and then take it where the line is to be made operative.

## Claims

1. Automobile body assembly and processing line and possible assembly thereon of component members to be associated with the body and made up of a succession of associable aligned central units comprising positioning members for the automobile members which are to be assembled and processed and control members for the various members reaching the position with there being associated with each of a plurality of central units at least one side unit on which is assembled processing equipment for the automobile members and powering, command and control devices for this equipment with there being assembled connectable terminals on the central and side units for forming connections between the electrical or fluidic systems between the central unit and the side unit associated therewith.

2. Line in accordance with claim 1 characterized in that each central unit is mounted on a platform and each side unit is mounted on a platform which can be placed beside the platform of a central unit.

3. Line in accordance with claim 2 characterized in that on the platform of each unit are provided terminals of the lines connecting to the associated unit with the terminals being gathered in a group arranged in a predetermined position located near the position where the group of terminals is arranged on the associated platform for acccomplishment of the connections between the terminals.

4. Line in accordance with claim 2 characterized in that on the platform of each side unit are mounted pieces of operating equipment and associated supply, command and control devices as well as complementary devices for operation of said operating equipment so that the side unit constitutes an independent subassembly connectable to any one of a plurality of central units mounted in the line.
